# EUROPEAN PATENT SPECIFICATION

(11) **EP 2 330 787 B1**
(45) Date of publication and mention of the grant of the patent: **27.09.2017**
(21) Application number: 09014877.6
(22) Date of filing: 01.12.2009
(51) Int. Cl.: H04L 29/06, G06K 19/077, G06F 21/34

(54) **GENERATION OF A TIME-DEPENDENT PASSWORD IN A MOBILE COMUNICATION DEVICE**
ERSTELLUNG EINES ZEITABHÄNGIGEN PASSWORTES IN EINER MOBILEN KOMMUNIKATIONSVORRICHTUNG
GÉNÉRATION D'UN MOT DE PASSE DÉPENDANT DU TEMPS DANS UN DISPOSITIF DE COMMUNICATION MOBILE

(43) Date of publication of application: 08.06.2011
(73) Proprietor: Vodafone Holding GmbH, 40213 Düsseldorf (DE)
(72) Inventor: Hoeksel, Sebastiaan, 6229 VN Maastricht (NL); Koraichi, Najib, 6333 CT Schimmert (NL); Waters, Patrick H., Salisbury SP5 2HN (GB)
(74) Representative: Jostarndt Patentanwalts-AG

(56) References cited:
- WO-A1-2007/126227
- GB-A- 2 420 098
- US-A1- 2001 054 148
- US-A1- 2006 219 776

## Description

The invention relates to the generation of time-dependent passwords, particularly to the generation of time-synchronized one-time passwords. More specifically, the invention relates to a mobile communication device and to a smartcard for generating a time-dependent password. The Invention further relates to a method for generating a time-dependent password in a mobile communication device.

Conventional static passwords bear the risk to be discovered by unauthorized third parties. Protection against unauthorized access to restricted resources can be improved by using so-called one-time passwords (OTPs), which are valid only for one time. An OTP mechanism, commonly referred to as time-synchronized type OTP, involves synchronized time information for generating and validating OTPs. At regular time intervals, such as, for example, every minute, a security device or an application, which is usually called "token", generates a new OTP from current time information and a secret key assigned to the user. For validating the OTP, an authorization station re-generates the OTP based on the secret key and own current time information using the same algorithm as the token and compares the self-generated password with the password generated by the token.

The token may be a closed, tamper-resistant hardware system dedicated to the generation of OTPs, which stores the secret key of the user and which usually has a built-in clock for providing the time information. As an alternative, the token may be configured as a so-called "soft token", which is a software application run on a general-purpose processor.

WO 2007/126227 describes a mobile communication device, such as, for example, a mobile phone, a PDA (Personal Data Assistant) or the like, which has an interface for accepting an IC chip (IC: Integrated Circuit) for generating time-synchronized type OTPs. The IC chip stores the user's secret key and comprises a module for generating the OTPs. The time information is provided by a base station and received by the radio frequency processing unit of the mobile communication device.

The IC chip allows for implementing the token for generating time-synchronized type OTPs in a mobile communication device. However since an external time signal provides the time information for generating the OTPs, the time information is available only if the mobile communication device is connected to the base station. This means that the generation of OTPs is not possible, if the mobile communication device cannot be connected to the base station.

US 2001/0054148 discloses a generic terminal which is used together with a smart card as token device offering authentication functionality for accessing services. The smart card provides the personalization of the token device and includes the personal information of the user. The token device is enabled to generate time-based passwords, time-based signatures etc. using an internal clock powered by an internal battery.

US 2006/029776 relates to a RFID reader with multiple interfaces. The reader is particularly enabled to generate time-synchronous passwords in sync with an Internet atomic clock. The reader synchronizes itself periodically with the Internet atomic clock.

GB 2420098 A discloses an identification card including a bio-sensor, a memory, a real time clock, a power supply and a microprocessor. The bio-sensor is configured to collect a signature biometric characteristic from a verified user. The memory is configured to store the signature biometric characteristic. The microprocessor is coupled to the bio-sensor and the memory. The microprocessor is configured to retrieve the signature biometric characteristic from the memory and to perform comparison between the signature biometric characteristic and a sample biometric characteristic. The identification card is further arranged to generate a temporary password available and active for a limited time period by means of the signature biometric characteristic.

Therefore, it is an object of the present invention to allow for generating time-synchronized OTPs in a mobile communication device also when the device is not connected to the network.

The object is achieved by a mobile communication device comprising the features of claim 1, a smartcard comprising the features of claim 6 and by a method according to claim 7. Embodiments of the mobile communication device, the smartcard and the method are given in the dependent claims.

According to a first aspect of the invention a mobile communication device is suggested, which comprises a terminal and a smartcard connected to the terminal and which comprises a processing unit adapted to generate a time-dependent password. The smartcard includes a power source and a clock unit, which can be supplied with power by the power source, and the processing unit is adapted to generate the time-dependent password based on a time signal from the clock unit. The smartcard is further adapted to receive an external time signal and to synchronize the clock unit and the time signal.

According to a second aspect of the invention a smartcard for use in a mobile communication device is provided. The smartcard comprises a processing unit adapted to generate a time-dependent password and it comprises a power source and a clock unit, which can be supplied with power by the power source. The processing unit is adapted to generate the time-dependent password based on a time signal from the clock unit. The smartcard is further adapted to receive an external time signal and to synchronize the clock unit and the time signal.

According to a further aspect of the invention a method for generating a time-dependent password in a mobile communication device is suggested. In the method, the time-dependent password is generated in a processing unit based on a time signal from a clock unit, the clock unit being included in a smartcard of the mobile communication device and supplied with power by a power source included in the smartcard. Furthermore, an external time signal is received in the smartcard, and wherein the clock unit is synchronized based on the received time signal.

The invention involves the idea to provide the mobile communication device with an internal clock to provide time information for generating a time-dependent password independently of an external time signal received in the mobile communication device. Advantageously the clock unit is integrated into a smartcard of the mobile communication device. Thereby, the clock unit is protected by the secure architecture of the smartcard so that tampering with the time information is prevented.

In order to enable the clock unit to continuously measure time, it is powered by an internal power source of the smartcard. Thus, the clock unit can still be run, when the external power supply of the smartcard (i.e. the power supply from the terminal) is interrupted, which is usually the case, when the terminal is turned off. Thus, the clock unit can be configured as an essentially autarkic system, which provides tamper-resistant time information.

In one embodiment of the mobile communication device, the smartcard and the method, the power source can be charged from the terminal, when the terminal is turned on. In this embodiment, the power source may be a battery, for example. Advantageously, it can be recharged from the terminal so that exhaustion is prevented and the lifetime of the power source is increased.

In a further embodiment of the mobile communication device, the smartcard and the method, the processing unit generating the OTP is included in the smartcard. In particular, the processing unit may be a microcontroller of the smartcard executing an application for generating the OTP. By including the processing unit in the smartcard, it can likewise be secured against tampering by the secure hardware environment of the smartcard and its microcontroller. As an alternative, it is likewise possible to include the processing unit in the terminal of the mobile communication device.

The clock unit may be a sealed system measuring time independent from external devices or signals. This provides an especially high level of security. The mobile communication device, the smartcard and the method, the smartcard is adapted to receive an external time signal and to synchronize the clock unit and the time signal. This allows compensating for clock drift and resetting the clock in case of a possible exhaustion of the battery.

The smartcard may try to synchronize the clock unit regularly or triggered by predefined events. However, the external time signal may not be available all the time. The external time signal is received via a communication network to which the mobile communication device can be connected. Thus, synchronization is only possible when the mobile communication is connected to the network. However, usually the connection to the network is available sufficiently frequently so that a high accuracy of the clock unit can be achieved continuously.

In order to set or adjust the clock unit when the external time signal is available, the smartcard is adapted to check, whether the external time signal is accessible, and to synchronize the clock unit and the time signal, when it is determined that the external time signal is accessible.

The smartcard comprises a user identification module for identifying and/or authenticating a subscriber to a mobile communication network to which the mobile communication device can be connected. In mobile communications, such user identification modules are usually provided in smartcards which are connected to user terminals in order to use the terminals in a mobile communication network. By including the clock unit into such a smartcard further advantage can be taken of its existing security architecture. Thus, a secured clock unit can be provided without having to provide an additional complex secure hardware environment.

Furthermore, in one embodiment of the mobile communication device, the smartcard and the method, the processing unit is unlocked for generating the time-dependent password after an authorisation code entered by a user for the mobile communication device is verified successfully. Thus, it is prevented that an unauthorised person uses the mobile communication device or the smartcard to generate a time-dependent password. The authorisation code may be a PIN (Personal Identification Number), for example. It may be an authorisation code allocated to the generation of time-dependent passwords. In this case, the authorisation code may particularly be the secret key used for computing one-time password. As an alternative the authorisation code may be a code used for unlocking the smartcard or the user identification module included in the smartcard. In this embodiment, it can be relied on the security mechanism of the user identification module to unlock the processing unit for the generation of a time-dependent password.

The aforementioned and other aspects of the invention will be apparent from and elucidated with reference to the embodiments described hereinafter making reference to the accompanying drawings.

In the drawings
- Fig. 1: shows a communication system comprising a mobile communication device for generating a time-dependent password and
- Fig. 2: shows a smartcard for use in a mobile communication device, the smartcard comprising a clock unit for providing current time information.

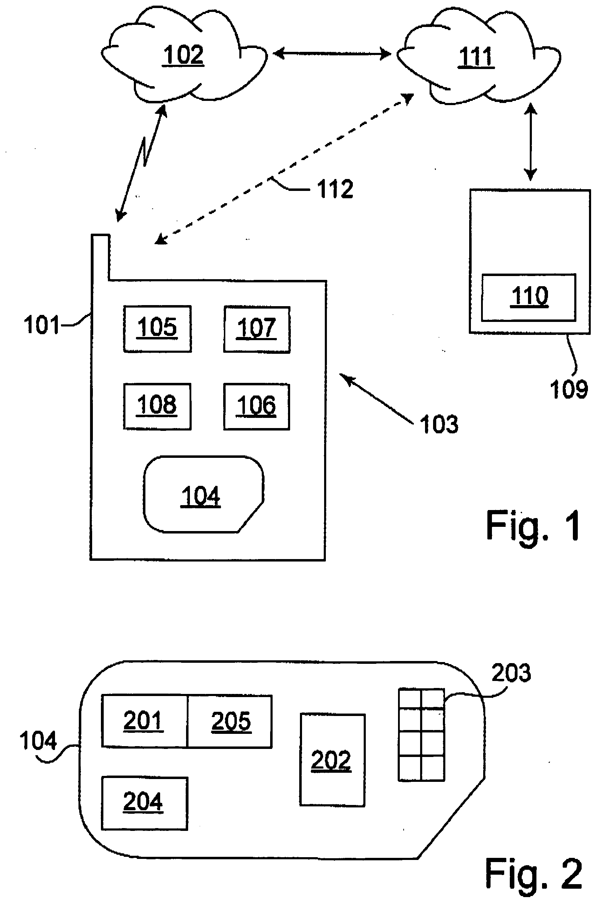

Figure 1 shows a mobile communication device 101, which can be connected to a mobile communication network (PLMN - Public Land Mobile Network) 102, which may be configured according to the GSM or UMTS standard, for example (GSM: Global System for Mobile Communications; UMTS: Universal Mobile Telecommunications System). The mobile communication device 101 includes a terminal 103 and a smartcard 104.

The terminal 103 comprises those components of the mobile communication device 101 which do not belong to the smartcard 104. For connecting the mobile communication device 101 to the PLMN 102, the terminal 103 comprises a radio interface 105. The radio interface 105 is coupled to a processor 106 of the terminal 103. For interacting with the mobile user, the terminal 103 comprises a user interface 107, which may include one or more input components and one or more output components and which is coupled to the processor 106. For supplying the components of the terminal 103 and also the smartcard 104 with power, the terminal 103 comprises a power source 108, which may be configured as a rechargeable battery.

The terminal 103 interacts with the smartcard 104, which can be inserted into a card reader unit of the terminal 103, which is not shown in figure 1. The smartcard 104 comprises an identification module allocated to a subscription of the mobile user to the PLMN 102. The identification module includes information for identifying and/or authenticating the subscribed user to the PLMN 102 and provides functionality for accessing services of the PLMN 102. The subscriber identification module may be configured in accordance with the type of the PLMN 102. If the PLMN 102 is a GSM or UMTS network, the subscriber identification module is a Subscriber Identity Module (SIM) according to the GSM standard or a Universal Subscriber Identity Module (USIM) according to the UMTS standard.

The user of the mobile communication device 101 has the authorisation to access a restricted resource of a host device 109. The host device 109 may be a computer and/or a web server and the restricted resource may be information and/or an application provided by the host device 109. To the host device 109 an authorisation unit 110 is assigned, which may be integrated into the host device 109. The authorisation unit 110 denies access to the restricted resource of the host device 109 unless the user is identified and authenticated successfully. The user authorisation in the authorisation unit 110 is performed using time-synchronised OTPs so that a high level of security of the access control is achieved.

For generating time-synchronised OTPs, the mobile communication device 101 comprises an OTP application. The OTP application may be resident in the terminal 103 and run on the terminal's processor 106. In a different embodiment, the OTP application is resident in the smartcard 104 including the subscriber identification module. This has the advantage that the OTP application is secured against unauthorized access by means of the security mechanism of the smartcard 104. In further embodiments, an OTP chip including the OTP application may be removably connected to the terminal 103.

In one embodiment, which is depicted in figure 1, a communication connection can be established between the authorisation unit 110 and the mobile communication device 101. Via this communication connection an OTP generated in the mobile communication device 101 can be transmitted electronically to the authorisation unit 110 for verification, when the mobile user wishes to access the restricted resource of the host device 109.

As shown in figure 1, the communication connection may be established via a data network 111, such as, for example, the Internet, to which the authorisation unit 110 is connected. The mobile communication device 101 may be connected to the data network 111 using a suitable access technology, such as, for example, a WLAN connection. In figure 1, this is schematically illustrated by means of the arrow 112. As an alternative, the mobile communication device 101 may be connected directly to the authorisation unit 110, or the PLMN 102 may be coupled to the data network 111, such that the communication connection between the mobile communication device 101 and the authorisation unit 110 can be established via the PLMN 102 and the data network 111, if the mobile communication device 101 is registered in the PLMN 102.

In a further embodiment, the OTP application outputs generated OTPs at the user interface 107 of the mobile communication device 101. The user reads that generated password at a display component of the user interface107 and enters the password at the apparatus used for accessing the restricted resource.

The mobile user may access the restricted resource of the host device 109 using the mobile communication device 101. For this purpose, the mobile communication device 101 may be connected to the host device 109 in the same way as to the authorisation unit 110, i.e. via the data network 111 and/or via the PLMN 102. In particular, the host device 109 may be accessed via the authorisation unit 110 through the network 111 or a direct connection described before. In this case, it is especially advantageous to transmit the OTP to the authorisation unit 110 electronically. In another embodiment, the mobile user accesses the host device 109 either directly via a user interface of the host device 109 or using a further device, such as for example a personal computer an/or a notebook computer, which is connected to the host device 109 directly or via the data network 111. In this embodiment, the OTP may either be transmitted from the mobile communication device 101 to the authorisation unit 110 electronically or the OTP may be input by the mobile user.

The OTP application may provide a graphical user interface at a display component of the user interface 107 of the mobile communication device 101 for depicting outputs and for presenting input requests to the user. In particular, the OTP may be presented in the graphical user interface, when it is read by the user to input it into the device used for accessing the restricted resource. Moreover, the OTP application is configured to receive user inputs from an input component of the user interface 107. If the OTP application resides in the smartcard 104, the OTP application may access the functionalities of the mobile communication device 101 using SIM Toolkit commands, which, in general, are known to a person skilled in the art.

For generating time-synchronised OTPs, an algorithm is implemented in the OTP application, which is used to calculate OTPs based on time information and a secret key allocated to the user. The secret key may be a personal identification number (PIN), for example. The secret key may be entered by the user, when the OTP application is started or when the user requested the generation of a password. Likewise, it is possible that the secret key is stored securely in the mobile communication device 101, particularly in the smartcard 104.

Before a password is generated, the user may be required to unlock the OTP application. If the secret key is entered by the user, this may correspond to the unlocking procedure for the OTP application. Alternatively, the OTP application may be unlocked only after a further authorisation code entered by the user has been validated successfully by the OTP application. This is especially advantageous, if the secret key for generating OTP is stored in the mobile communication device 101. The authorisation code may be another PIN and differ from the secret key allocated to the user in that the secret key is used to calculate the passwords, while the authorisation code is used to unlock the password generation. It may be allocated to the OTP allocation. In another embodiment, the OTP application is unlocked together with the user identification module of the SIM, which is usually also done based on an authorisation code entered by the user upon turning on the mobile communication device 101. Securing the OTP application with an authorisation code for unlocking the password generation has the advantage that an attacker has to use the mobile communication device 101 for generating passwords of the user, since the secret key is secured against access within the mobile communication device 101.

For validating the password generated by the OTP application, the authorisation unit 110 re-computes the passwords using the user's secret key, which is also stored in the authorisation station 110, and its own time information. The time information used by the OTP application and the time information present in the authorisation unit 110 have to be synchronised accurately enough. Usually, the authorisation unit 110 allows for generating passwords computed using time information with a predetermined deviation from the time information present in the authorisation unit 110. For this purpose, the authorisation unit 110 may determine that the password is valid, if it is calculated using a time from a predetermined time interval around the current time of the authorisation unit 110. The time interval may be between 0.5 and 15 minutes.

The OTP application can retrieve the time information needed for generating the time-synchronised OTPs from a clock unit 201 included in the smartcard 104. As is shown in figure 2, the smartcard 104 comprises a microcontroller 202, which includes a programmable processor unit for executing software applications and a memory for storing reference data and program code that is executable in the processor unit. An external interface 203 is provided, which allows for a data exchange between the microcontroller 202 and an external device. Moreover, power can be supplied to the smartcard 104 from the external device via the external interface 203. The external device is the terminal 103 of the mobile communication device 101, when the smartcard 104 is inserted therein.

The microcontroller 202 provides a secure environment for the execution of application and the storage of data. Particularly, this means that unauthorized access to data and processes is prevented due to the hardware design of the microcontroller 202 and due to cryptographic mechanisms used for managing data in the microcontroller 202. Moreover, the microcontroller 202 is integrated into a secure hardware environment provided by the smartcard 104, which is physically protected against manipulations, such as power analysis, reverse engineering etc. The microcontroller 202 may provide the subscriber identification module of the smartcard 104 and it may also store and execute the OTP application, when it is not executed in the terminal 103 of the mobile communication device 101. Thus, the OTP application is secured against tampering by means of the security features of the smartcard 104 and its microcontroller 202.

In addition, the smartcard 104 includes the clock unit 201 that may comprise an electronic oscillator, which may be regulated by a quartz crystal, for example. The clock unit 201 is continuously measuring time so that current time information can always be provided. Preferably, it generates absolute time information, which can be used by the OTP application for calculating OTPs. However, it is likewise possible that the clock unit 201 generates time information relative to a specific point in time. In this case, the OTP application or another component of the smartcard 104 or the terminal 103 may convert the relative time information provided by the clock unit 201 into absolute time information to calculate OTPs. As the microcontroller 202, the clock unit 201 is integrated into the secure hardware environment of the smartcard 104. Thus, tampering of the time information can be prevented. Additionally, the clock unit 201 may itself be protected against tampering by suitable measures.

In order to be able to continuously measure time, the clock unit 201 is continuously supplied with power. However, the external power supply of the smartcard 104 is interrupted each time the terminal 103 is turned off. Therefore, the clock unit 201 can be supplied with power by means of a power source 204 of the smartcard 104.

Preferably, the power source 204 is integrated into the body of the smartcard 104 together with the microcontroller 202 and the clock unit 201 without enlarging the dimensions of the smartcard 104, which are determined by a standardized format. The power source 204 may be a rechargeable battery comprising one or more battery cells. The battery is small and thin enough to be integrated into the body of the smartcard 104. For instance, the power source 204 may be a foil battery, a RHISS.battery (RHISS: Rechargeable Hydrogen Ion Solid State) or a thin-film battery.

Preferably, the power source 204 can be charged by connecting it to the power circuit of the terminal 103 via the external interface 203 of the smartcard 104, while the smartcard 104 is supplied with power by the terminal 103. Thus, in the usual use of the mobile communication device 101, the power source 204 can be charged regularly from the power source 108 of the terminal 103. Preferably, the charging is controlled by a power management unit of the microcontroller 202 of the smartcard 104. The power management unit may dispose of a mechanism to determine the state-of-charge of the power source 204, and if it is judged that the capacity of the power source 204 is below a predetermined threshold, charging is done (the microcontroller 202 may be supplied with power by the terminal 103 so that the power supply by the terminal 103 is always available, when the power management unit is operating).

The clock unit 201 may be supplied with power exclusively by means of the power source 204 of the smartcard 104. As an alternative, the clock unit 201 may be supplied with power by the power source 204 only when the external power supply of the smartcard 104 is not available, i.e. when the terminal 103 is turned off. When the terminal 103 is turned on and supplies power to the smartcard 104, the clock unit 201 may be supplied with power by the terminal 103 via the external interface 203 of the smartcard 104. For this purpose, the power management unit of the smartcard 104 may be configured to switch the power supply to a supply via the external interface 203 of the smartcard 104, when it is determined that the terminal 103 is operating. This may be done by connecting the clock unit 201 to the power terminal of the external interface 203. When the power management unit determines that the terminal 103 is switched off, it connects the clock unit 201 to the internal power source 204 of the smartcard 104 so that the power source 204 supplies the clock unit 201 with power.
The clock unit 201 may be set once at the time of manufacture of the smartcard 104. Then, it may be sealed in order to prevent tampering so that a very high degree of security is achieved and no external time information is required. However, in another embodiment, a control unit 205 is assigned to the clock unit 201 which is configured to set the clock unit 201 after issuance of the smartcard 104. This allows for adjusting the clock unit 201 to compensate for clock drift and it allows for resetting the clock unit 201 In case of possible battery exhaustion. In accordance with the invention, the clock unit 201 is set using an external time signal, which is received via the PLMN 102. For this purpose, the PLMN 102 may provide a service for retrieving time information. In one embodiment, the service may be accessed using so-called USSD commands (USSD: Unstructured Supplementary Service Data), which are, in general, known to a person skilled in the art. As an alternative, the time signal may be received from a predefined time server in the PLMN 102 or in the data network 111. The time server may be synchronized with the time information used in the authorisation unit 110, so that it is guaranteed that synchronised time information is used for generating and verifying OTPs. Thus, even when the mobile communication device 101 is located in another time zone than the authorisation unit 110, correct time information is available (in this case, the clock unit 201 may also measure the time used in the authorisation and not the local time).
The control unit 205 may retrieve external time information via the terminal 103 at regular time intervals or triggered by predetermined events, such as, for example, a user interaction, and synchronizes the clock unit 201 with the external time information. Thus, the dock unit 201 can be adjusted regularly, when the mobile communication device 101 is connected to the PLMN 102. In order to avoid the issuance of a command for retrieving the external time information when the mobile communication device 101 is not connected to the PLMN 102, the control unit 205 checks, whether the mobile communication device 101 Is connected to the PLMN 102, before issuing the command. This may be done by checking, whether a predetermined data signal broadcasted in the PLMN 102 is received in the mobile communication device 101, such as, for example, a signal Identifying the PLMN 102 that is broadcasted in the PLMN 102 in regular time intervals. The command for retrieving the external time information may be issued only when it is determined that such a broadcasted signal is received.
In order to prevent the clock unit 201 from being tampered with using a manipulated external time signal, the time information may be encrypted and/or accompanied by a security feature, such as, for example, a digital signature of the time server. The security feature of the time information may be verified in the control unit 205 before setting the dock unit 201. Moreover, the control unit 205 may compare currently received time information with the time information received before and checks, whether the time information received before indicate a point of time in the past relative to the currently received time information. If this comparison was successful, the control unit 205 sets the clock unit 201 using the currently received time information. Otherwise an alarm routine may be started.
In one embodiment, the OTP application exclusively uses the time information provided by the clock unit 201 for generating OTPs. This has the advantages that time information is always provided to the OTP application in the same way and that attacks using a manipulation of external time information can be prevented. In an alternative embodiment, the processing unit executing the OTP application is adapted to check, if external time information is available and the OTP is computed using the external time information, if it is available. This means that time signal of the clock unit 201 is only used, when the external time signal is not available, i.e. when the mobile communication device 101 is connected to the PLMN 102. If the mobile communication device 101 is registered in the PLMN 102, the OTP application may use the external time information retrieved via the PLMN 102 to calculate the OTP. For this purpose, the OTP application may try to retrieve external time information via the PLMN 102 at first, when the OTP is to be generated. When external time information is available, the OTP application may use this time information to generate the OTP. If the external time information cannot be received, the OTP application may retrieve time information from the clock unit 201 to generate the OTP.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single processor or other unit may fulfill the functions of several items recited in the claims. A computer program may be stored/distributed on a suitable medium, such as an optical storage medium or a solid-state medium supplied together with or as part of other hardware, but may also be distributed in other forms, such as via the Intemet or other wired or wireless telecommunication systems. Any reference signs in the claims should not be construed as limiting the scope.

## Claims

1. A mobile communication device (101) comprising a terminal (103) and a smartcard (104) connected to the terminal (103) and comprising a processing unit (106; 202) adapted to generate a time-dependent password, the smartcard (104) includes a power source (204) and a clock unit (201) which can be supplied with power by the power source (204), and the processing unit (106; 202) is adapted to generate the time-dependent password based on a time signal from the clock unit (201) ,wherein the smartcard (104) is adapted to receive an external time signal and to synchronize the clock unit (201) and the time signal, **characterized in that** the smartcard (104) comprises a user identification module for identifying and/or authenticating a subscriber to a mobile communication network (102) to which the mobile communication device (101) can be connected, wherein the external time signal is received via the communication network (102; 111) and wherein the smartcard (104) is adapted to check, whether the external time signal is accessible, and to synchronize the clock unit (201) and the time signal, when it is determined that the external time signal is accessible.

2. A mobile communication device (101) according to claim 1, wherein the power source (204) is adapted to be charged from the terminal (103), when the terminal (103) is turned on.

3. A mobile communication device (101) according to claim 1 or 2, wherein the power source (204) is a rechargeable battery.

4. A mobile communication device (101) according to one of the preceding claims, wherein the processing unit (202) is included in the smartcard (104).

5. A mobile communication (101) according to one of the preceding claims, wherein the processing unit (106; 202) is adapted to be unlocked for generating the time-dependent password after an authorisation code entered by a user for the mobile communication device (101) is verified successfully.

6. A smartcard (104) for use in a mobile communication device (101), the smartcard (104) comprising a processing unit (202) adapted to generate a time-dependent password and further comprising a power source (204) and a clock unit (201), which is adapted to be supplied with power by the power source (204), wherein the processing unit (202) is adapted to generate the time-dependent password based on a time signal from the clock unit (201), wherein the smartcard (104) is adapted to receive an external time signal and to synchronize the clock unit (201) and the time signal, **characterized in that** the smartcard (104) comprises a user identification module for identifying and/or authenticating a subscriber to a mobile communication network (102) to which the mobile communication device (101) can be connected, wherein the external time signal is received via the communication network (102; 111) and wherein the smartcard (104) is adapted to check, whether the external time signal is accessible, and to synchronize the clock unit (201) and the time signal, when it is determined that the external time signal is accessible.

7. A method for generating a time-dependent password in a mobile communication device (101), wherein the time dependent password is generated in a processing unit (106; 202) based on a time signal from a clock unit (201), the clock unit (201) is included in a smartcard (104) of the mobile communication device (101) and supplied with power by a power source (204) included in the smartcard (104), wherein the mobile communication device (101) is connected to a mobile communication network (102) by means of a user identification module for identifying and/or authenticating a subscriber comprised by the smartcard (104), wherein the smartcard (104) checks, whether an external time signal is accessible, wherein the external time signal is received in the smartcard via the communication network (102; 111), and wherein the clock unit is synchronized based on the received time signal, when it is determined that the external time signal is accessible.

## Patentansprüche

1. Mobilkommunikationsvorrichtung (101), die ein Endgerät (103) und eine mit dem Endgerät (103) verbundene Chipkarte (104) umfasst und die eine Verarbeitungseinheit (106; 202) umfasst, die zum Erzeugen eines zeitabhängigen Passworts ausgelegt ist, wobei die Chipkarte (104) eine Energiequelle (204) und eine Takteinheit (201), der durch die Energiequelle (204) Energie zugeführt werden kann, enthält, und wobei die Verarbeitungseinheit (106; 202) dafür ausgelegt ist, das zeitabhängige Passwort auf der Grundlage eines Zeitsignals von der Takteinheit (201) zu erzeugen, wobei die Chipkarte (104) dafür ausgelegt ist, ein externes Zeitsignal zu empfangen und die Takteinheit (201) und das Zeitsignal zu synchronisieren, **dadurch gekennzeichnet, dass** die Chipkarte (104) ein Nutzeridentifikationsmodul zum Identifizieren und/oder Authentifizieren eines Teilnehmers bei einem Mobilkommunikationsnetz (102), mit dem die Mobilkommunikationsvorrichtung (101) verbunden werden kann, umfasst, wobei das externe Zeitsignal über das Kommunikationsnetz (102; 111) empfangen wird und wobei die Chipkarte (104) dafür ausgelegt ist zu prüfen, ob auf das externe Zeitsignal zugegriffen werden kann, und die Takteinheit (201) und das Zeitsignal zu synchronisieren, wenn bestimmt wird, dass auf das externe Zeitsignal zugegriffen werden kann.

2. Mobilkommunikationsvorrichtung (101) nach Anspruch 1, wobei die Energiequelle (204) dafür ausgelegt ist, von dem Endgerät (103) geladen zu werden, wenn das Endgerät (103) eingeschaltet ist.

3. Mobilkommunikationsvorrichtung (101) nach Anspruch 1 oder 2, wobei die Energiequelle (204) eine nachladbare Batterie ist.

4. Mobilkommunikationsvorrichtung (101) nach einem der vorhergehenden Ansprüche, wobei die Verarbeitungseinheit (202) in der Chipkarte (104) enthalten ist.

5. Mobilkommunikationsvorrichtung (101) nach einem der vorhergehenden Ansprüche, wobei die Verarbeitungseinheit (106; 202) dafür ausgelegt ist, zum Erzeugen des zeitabhängigen Passworts entsperrt zu werden, nachdem ein durch einen Nutzer für die Mobilkommunikationsvorrichtung (101) eingegebener Autorisierungscode erfolgreich überprüft worden ist.

6. Chipkarte (104) zur Verwendung in einer Mobilkommunikationsvorrichtung (101), wobei die Chipkarte (104) eine Verarbeitungseinheit (202) umfasst, die dafür ausgelegt ist, ein zeitabhängiges Passwort zu erzeugen, und ferner eine Energiequelle (204) und eine Takteinheit (201), die dafür ausgelegt ist, dass ihr durch die Energiequelle (204) Energie zugeführt wird, umfasst, wobei die Verarbeitungseinheit (202) dafür ausgelegt ist, das zeitabhängige Passwort auf der Grundlage eines Zeitsignals von der Takteinheit (201) zu erzeugen, wobei die Chipkarte (104) dafür ausgelegt ist, ein externes Zeitsignal zu empfangen und die Takteinheit (201) und das Zeitsignal zu synchronisieren, **dadurch gekennzeichnet, dass** die Chipkarte (104) ein Nutzeridentifikationsmodul zum Identifizieren und/oder Authentifizieren eines Teilnehmers bei einem Mobilkommunikationsnetz (102), mit dem die Mobilkommunikationsvorrichtung (101) verbunden werden kann, umfasst, wobei das externe Zeitsignal über das Kommunikationsnetz (102; 111) empfangen wird und wobei die Chipkarte (104) dafür ausgelegt ist zu prüfen, ob auf das externe Zeitsignal zugegriffen werden kann, und die Takteinheit (201) und das Zeitsignal zu synchronisieren, wenn bestimmt wird, dass auf das externe Zeitsignal zugegriffen werden kann.

7. Verfahren zum Erzeugen eines zeitabhängigen Passworts in einer Mobilkommunikationsvorrichtung (101), wobei das zeitabhängige Passwort in einer Verarbeitungseinheit (106; 202) auf der Grundlage eines Zeitsignals von einer Takteinheit (201) erzeugt wird, wobei die Takteinheit (201) in einer Chipkarte (104) der Mobilkommunikationsvorrichtung (101) enthalten ist und wobei ihr durch eine in der Chipkarte (104) enthaltene Energiequelle (204) Energie zugeführt wird, wobei die Mobilkommunikationsvorrichtung (101) mittels eines Nutzeridentifikationsmoduls mit einem Mobilkommunikationsnetz (102) verbunden wird, um einen durch die Chipkarte (104) umfassten Teilnehmer zu identifizieren und/oder zu authentifizieren, wobei die Chipkarte (104) prüft, ob auf ein externes Zeitsignal zugegriffen werden kann, wobei das externe Zeitsignal über das Kommunikationsnetz (102; 111) in der Chipkarte empfangen wird und wobei die Takteinheit auf der Grundlage des empfangenen Zeitsignals synchronisiert wird, wenn bestimmt wird, dass auf das externe Zeitsignal zugegriffen werden kann.

## Revendications

1. Dispositif de communication mobile (101) comprenant un terminal (103) et une carte à puce (104) connectée au terminal (103) et comprenant un module de traitement (106 ; 202) adapté à générer un mot de passe temporaire, la carte à puce (104) inclut une source de puissance (204) et un module d'horloge (201) qui peut être alimenté en puissance par la source de puissance (204), et le module de traitement (106 ; 202) est adapté à générer le mot de passe temporaire en fonction d'un signal de temps provenant du module d'horloge (201), dans lequel la carte à puce (104) est adaptée à recevoir un signal de temps externe et à synchroniser le module d'horloge (201) et le signal de temps, **caractérisé en ce que** la carte à puce (104) comprend un module d'identification d'utilisateur pour identifier et/ou authentifier un abonné à un réseau de communication mobile (102) auquel le dispositif de communication mobile (101) peut être connecté, dans lequel le signal de temps externe est reçu par le biais du réseau de communication (102 ; 111) et dans lequel la carte à puce (104) est adaptée à contrôler si le signal de temps externe est accessible et à synchroniser le module d'horloge (201) et le signal de temps lorsqu'il est déterminé que le signal de temps externe est accessible.

2. Dispositif de communication mobile (101) selon la revendication 1, dans lequel la source de puissance (204) est adaptée à être chargée depuis le terminal (103) lorsque le terminal (103) est allumé.

3. Dispositif de communication mobile (101) selon la revendication 1 ou 2, dans lequel la source de puissance (204) est une batterie rechargeable.

4. Dispositif de communication mobile (101) selon une des revendications précédentes, dans lequel le module de traitement (202) est inclus dans la carte à puce (104).

5. Communication mobile (101) selon une des revendications précédentes, dans laquelle le module de traitement (106 ; 202) est adapté à être déverrouillé pour générer le mot de passe temporaire après qu'un code d'autorisation entré par un utilisateur pour le dispositif de communication mobile (101) est vérifié avec succès.

6. Carte à puce (104) destinée à être utilisée dans un dispositif de communication mobile (101), la carte à puce (104) comprenant un module de traitement (202) adapté à générer un mot de passe temporaire et comprenant en outre une source de puissance (204) et un module d'horloge (201) qui est adapté à être alimenté en puissance par la source de puissance (204), dans laquelle le module de traitement (202) est adapté à générer le mot de passe temporaire en fonction d'un signal de temps provenant du module d'horloge (201), dans laquelle la carte à puce (104) est adaptée à recevoir un signal de temps externe et à synchroniser le module d'horloge (201) et le signal de temps, **caractérisée en ce que** la carte à puce (104) comprend un module d'identification d'utilisateur pour identifier et/ou authentifier un abonné à un réseau de communication mobile (102) auquel le dispositif de communication mobile (101) peut être connecté, dans laquelle le signal de temps externe est reçu par le biais du réseau de communication (102 ; 111) et dans laquelle la carte à puce (104) est adaptée à contrôler si le signal de temps externe est accessible et à synchroniser le module d'horloge (201) et le signal de temps lorsqu'il est déterminé que le signal de temps externe est accessible.

7. Procédé de génération d'un mot de passe temporaire dans un dispositif de communication mobile (101), dans lequel le mot de passe temporaire est généré dans un module de traitement (106 ; 202) en fonction d'un signal de temps provenant d'un module d'horloge (201), le module d'horloge (201) est inclus dans une carte à puce (104) du dispositif de communication mobile (101) et alimenté en puissance par une source de puissance (204) inclue dans la carte à puce (104), dans lequel le dispositif de communication mobile (101) est connecté à un réseau de communication mobile (102) au moyen d'un module d'identification d'utilisateur pour identifier et/ou authentifier un abonné compris par la carte à puce (104), dans lequel la carte à puce (104) contrôle si un signal de temps externe est accessible, dans lequel le signal de temps externe est reçu dans la carte à puce par le biais du réseau de communication (102 ; 111) et dans lequel le module d'horloge est synchronisé en fonction du signal de temps reçu lorsqu'il est déterminé que le signal de temps externe est accessible.
